# EUROPEAN PATENT APPLICATION

(11) **EP 1 935 689 A2**
(43) Date of publication of application: **25.06.2008**
(21) Application number: 07123691.3
(22) Date of filing: 19.12.2007
(51) Int. Cl.: B60J 5/06

(54) **Vehicle security system**

(30) Priority: 20.12.2006 GB 0625328
(71) Applicant: Maple Fleet Services Limited, Stockport Cheshire SK1 3EU (GB)
(72) Inventor: Maple, Alan James Maple Fleet Services Limited, Cheadle, Cheshire SK8 7HP (GB)
(74) Representative: Gillam, Francis Cyril

(57) **Abstract**

A vehicle load space 10 has a closure 12 with a plurality of fasteners 16 each having a locking aperture to permit the locking of the fastener. A security system for the vehicle has a locking member in the form of an elongate hollow tube 21 closed at its ends 23,25 and adapted to be passed through the fastener locking apertures. Fluid contained within the tube is pressurised at one location 23 and the pressure in the tube is monitored at another location 25 and an alarm arrangement 28,30 enters a warning state if the monitored pressure falls below a pre-set threshold. An elongate member 40 resistant to crushing extends internally of the tube 21 for substantially the whole length of the tube.

## Description

This invention relates to a security system for a commercial vehicle. In particular, but not exclusively, this invention concerns a security system for a commercial vehicle having a curtain-sided load space the curtain of which has a plurality of individually-operable fasteners for tensioning the curtain. Further, this invention relates to a commercial vehicle in combination with a security system for the load space thereof.

A common form of commercial vehicle known as a curtain-sided vehicle has a load space having open sides, to allow direct access for example by a fork lift truck to at least the greater part, if not all, of that load space. On each side, a curtain is suspended from a roof member and has a plurality of vertically-extending, horizontally-spaced tensioning strips, each of which is provided at its lower end with a buckle assembly including a ratchet mechanism. A plurality of webbing straps are attached to a lower part of the vehicle and each strap may be connected to a respective buckle so as to tension the curtain, by operating the ratchet mechanism.

Each buckle assembly has a locking aperture, so that operation of the mechanism can be prevented by passing a member through that aperture. It is known to provide an elongate flexible steel cable which is threaded through the locking apertures in sequence, once all of the buckles have been operated to tension the curtain and then to secure the ends of that cable to the vehicle body for example by suitable locks, or to run the cable round the load space and secure the ends of the cable together. If the compartment has doors, then the cable may be run through fasteners (locks) for the doors and so secure those in the closed position as well.

A system as discussed above has been developed to allow the easy transport of goods across country borders without having to have the cargo inspected by the Customs authorities at a border, by sealing the ends of the cable and associating that seal with documents which satisfy the Customs authorities. This is known as a TIR (Transport International Routier) system.

Unfortunately, it has proved possible to gain access to the goods compartment of a curtain-sided vehicle sealed by a TIR system by cutting the cable partway between its ends and releasing a few of the tensioning buckles. In this way, the goods contained within the vehicle may be tampered with or stolen, or other goods (such as contraband or even illegal immigrants) can be stowed on the vehicle, for transport across borders. Once done, the curtain may be re-tensioned by operating the buckles, the cable rethreaded through the locking apertures and then the cut ends of the cable re-joined for example by adhesive tape, which is then camouflaged. The join is then unlikely to be noticed either by a driver of the vehicle or a Customs inspector.

In an attempt to solve this problem, it is known to incorporate the cable in an electrical circuit which can operate an alarm in the event that the cable is cut. However, it is easy to override that system by connecting a by-pass conductor to the TIR cable, clipping the by-pass conductor on to the cable to each side of the location where the cut is to be made. In this way, access to the load space can still be gained without tripping the alarm.

It is a principal aim of the present invention to provide a security system for a commercial vehicle by emulating the TIR system but providing a greater assurance that access has not been gained to the load space in an unauthorised manner.

According to this invention, there is provided a security system for a commercial vehicle having a load space provided with a closure having a plurality of operable fasteners each having a locking aperture for receiving a locking member so that the fastener cannot be operated when a locking member passes therethrough, which security system comprises an elongate hollow tube closed at its two ends and adapted to be passed through said locking apertures of the fasteners, pressure means connected to the tube at one location and arranged to pressurise fluid contained within the tube, monitoring means connected to the tube at a second location spaced from said one location and arranged to monitor the pressure of fluid in the tube, and alarm means connected to the monitoring means and arranged to enter a warning state in the event the monitored pressure falls below a preset threshold.

It will be appreciated that this invention is particularly applicable to a curtain-sided vehicle where each fastener comprises a tensioning buckle for the curtain. As such, the invention will hereinafter be described with reference to a curtain-sided vehicle even though it could be used with other commercial vehicles, for example having cargo loading doors which are provided with releasable fasteners (lock mechanisms) to secure the doors in a closed position.

With this invention, a hollow tube serves as the TIR cable which tube contains a fluid (and preferably air) under pressure and there is a separate detector for the pressure of that fluid in the tube. Should the tube be cut, in order to allow the releasing of one or more of the fasteners, the pressure in the tube will immediately fall so triggering the alarm means. This will warn a driver of the vehicle or the Customs authorities that the TIR seal has been breached, so warranting an investigation of the load space of the vehicle.

Preferably, the pressure means is connected to the tube at or adjacent one end thereof, the monitoring means then being connected to the tube at or adjacent the other end thereof. In the alternative, the pressure means could be connected to the tube partway between the ends thereof, there being at least one monitoring means located at one end of the tube but preferably two such monitoring means, disposed one at each end of the tube, respectively.

Though offering enhanced security, it could be possible still to defeat the system by crushing the tube to each side of the location where a cut is to be made, for example by using a clamp on the tube, such as is often employed on flexible hydraulic brake lines of vehicles when servicing the brakes. In order to overcome this potential problem, the security may be improved by providing within the tube an elongate member resistant to crushing, which member extends for substantially the whole length of the tube from one end to the other. If then clamps are applied to the tube to each side of the location where a cut is to be made, the clamp will not be able to give a fluid-tight seal and so pressure will be lost on cutting the tube, thus triggering an alarm condition.

Preferably, the tube includes end closures which are adapted for securing either to each other or to a suitable part of the vehicle, by means of a lock suitable for being sealed by a Customs authority. The elongate member may be attached to the end closures so as to extend for the full length of the tube, and may comprise one of a metal bar or rod, or a steel cable.

In a preferred embodiment, the pressure means applies a steady fluid pressure to the interior of the tube, though it would be possible for the pressure means to apply a time-varying fluid pressure to the interior of the tube, the monitoring means being tuned to detect that time varying pressure and to issue an alarm condition in the event that the time varying pressure no longer is detected, even if the pressure remains above a pre-set threshold. When the fluid comprises air the pressure means may include a connection to a tank for air under pressure and associated with the brakes of the vehicle.

The alarm means may provide one or both of a visual indication and an audible alarm in the event that the monitoring means detects an unexpected variation of the pressure in the tube, such as a fall in the pressure below a threshold value in the case of the pressure means applying a constant pressure. Preferably, the alarm means is arranged to latch in an alarm condition once the monitoring means detects an unexpected variation of the pressure in the tube.

This invention extends to a commercial vehicle having a load space provided with a closure (such as a curtain) having a plurality of operable fasteners, in combination with a security system of this invention as described above and with the tube thereof passing in sequence through the locking apertures of the fasteners.

By way of example only, one specific embodiment of security system of this invention arranged for use with a curtain-sided commercial vehicle will now be described in detail, reference being made to the accompanying drawings in which:-
Figure 1 diagrammatically illustrates a curtain-sided semi-trailer fitted with the security system;
Figure 2 is a theoretical diagram showing the security system as implemented on a commercial vehicle; and
Figure 3 is a cross-section through the pneumatic cord used in the system of Figures 1 and 2.

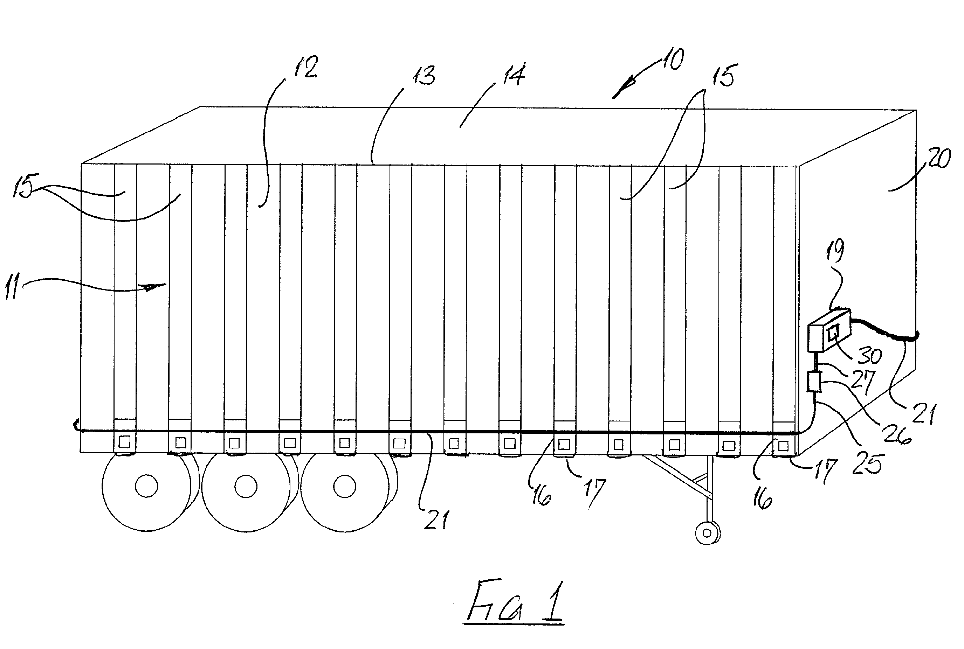

Referring initially to Figure 1, there is shown in diagrammatic form a semi-trailer 10 of a known design and having a generally box-like goods compartment open on both sides 11, but closed by means of a flexible curtain 12 suspended on runners provided along edge 13 of the trailer roof 14. Connected to each runner is a downwardly extending strip 15 provided with a respective buckle 16 at its lower end and connected to a webbing strap 17 secured to the semi-trailer below the load compartment. The curtain 12 is tensioned by interconnecting the webbing straps with the associated buckles and then tightening the ratchet mechanism of each buckle. When access is to be gained to the load space, the webbing straps are released from the buckles and then the curtain 12 may be drawn to one end of the trailer.

Each buckle includes an aperture for receiving a locking member. When a locking member is passed through that aperture, operation of the buckle is inhibited, so that the strap may neither be tightened nor released from the buckle. Conventionally, a TIR cord is passed successively through all of the buckle apertures and then the ends of the cord are secured together and sealed in an appropriate manner, such that if the seal is broken, the integrity of the load space cannot be assured, but conversely if the trailer arrives at its destination with the seal intact, there is a presumption that there has been no access to the load space.

According to this embodiment of the invention, a control box 19 is mounted on front wall 20 of the semi-trailer and a pneumatic cord 21 extends successively through the locking apertures of the buckles 16, right round the trailer and with the two ends of the cord plugged into the control box 19. At the rear of the trailer, there may be provided access doors fitted with fasteners to secure the doors in a closed position; in this case, the pneumatic cord may also pass through those fasteners in order to secure those fasteners against opening. Once the curtains of the load space have been closed and the webbing straps 17 connected to the buckles 16 and tightened, the pneumatic cord is passed through those locking apertures. Thereafter, access may be gained to the load space only by removing the pneumatic cord from the apertures.

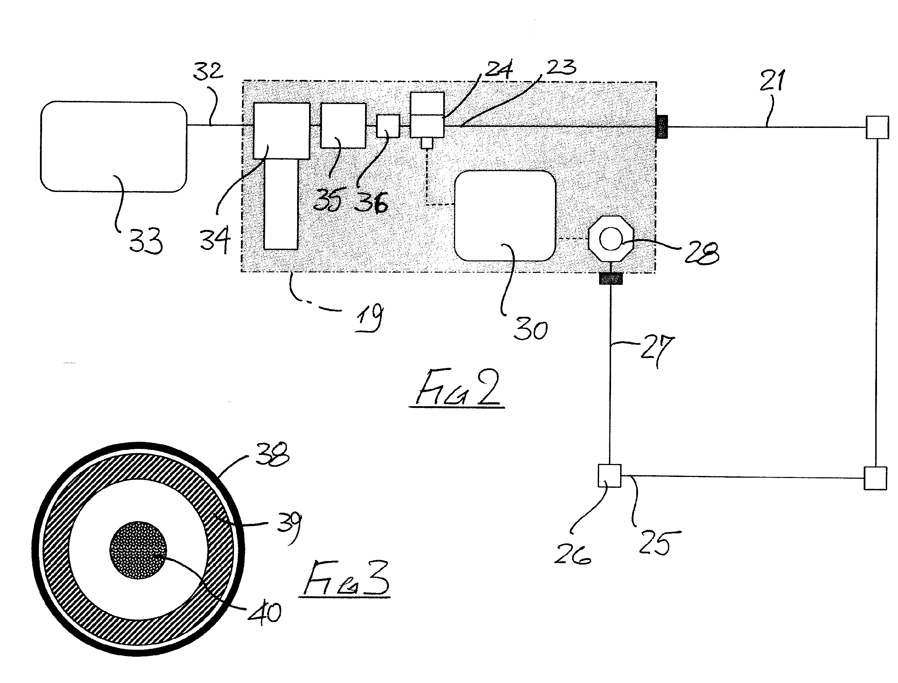

Figure 2 diagrammatically illustrates the control box 19. One end 23 of the pneumatic cord 21 is permanently connected within the control box to a solenoid valve 24, the other end 25 of the pneumatic cord being coupled to a connector 26 provided on the end of a short line 27 connected internally of the control box to a pressure switch 28. The connector 26 is arranged so that it may be sealed when the other end 25 has been connected thereto, for example by means of a Customs-approved plastic or lead seal whereby the cord 21 may be disconnected from the connector 26 only by breaking the seal. The pressure switch 28 provides an electrical output to an electronic module 30 mounted with the control box 19, which module also provides an output to the solenoid valve 24 to control the operation thereof.

The control module 19 is connected by line 32 to the vehicle air tank 33, for storing air under pressure for releasing the vehicle brakes. Line 32 connects to a filter 34 which supplies air under pressure to a regulator 35, the output of the regulator passing through a non-return valve and flow restrictor 36 to the inlet side of the solenoid valve 24. The flow restrictor serves to ensure the maximum flow rate of air to the valve 24 is less than that which can be obtained from the vehicle air compressor, whereby a failure somewhere in the system will not affect operation of the vehicle brakes.

Once the vehicle load space has been loaded with cargo and the curtains closed and tightened down, the pneumatic cord 21 is passed successively through the apertures of the buckles, right round the vehicle and back to the control box 19, whereat the free end of the cord is plugged into the connector 26. That connector is then sealed as described above, whereafter the electronic module 30 is operated in order to charge the pneumatic cord with air under pressure from the vehicle air tank 33. Once done, the valve 24 is closed again and the electronic module 30 starts to monitor the pressure switch 28. In the event that the pressure detected by the switch falls below a threshold value - such as might occur in the event that the cord is cut - the module registers an alarm condition and gives an appropriate indication, either visually or audibly, or perhaps both.

Though the electronic module could be operated in a number of different ways, a preferred embodiment employs a smart card pre-programmed with appropriate data and which is presented to the module in order to effect arming of the system. A further smart card programmed with different data is presented to the module at the destination of the goods, in order to allow breaking of the seal and removal of the other end 25 of the pneumatic cord 21 from the connector 26, without an alarm condition being triggered.

Figure 3 is a cross-section through the pneumatic cord 21. As can be seen, this cord comprises a protective stainless steel outer sheath 38 within which extends a pneumatic inner tube 39. A non-collapsible flexible cable 40 extends within the inner tube 39 for the full length thereof, so that clamping of the pneumatic cord will not effect an airtight seal, so that air pressure will be lost from the cord in the event that it is cut through, even if clamped to each side of the cut.

It will be appreciated that once the pneumatic cord has been passed through all of the buckles following the tightening thereof and the cord then coupled to the connector 26, the system may be armed. If thereafter pressure is lost from the cord, for any reason, an alarm condition will be registered unless the system has first been reset by employing another smart card programmed with appropriate data. In this way, the integrity of a load carried in the load space may be assured and greater resistance to tampering provided, than with conventional TIR cords.

The pneumatic cord is likely to suffer wear and chafing when in use, and so it is envisaged that it will need replacement on a routine period basis. To facilitate this, end 23 of the cord may be provided with a connector part similar to that on the other end 25 of the cord, so that the end 23 may be released at will from the control box 19. In this case, both connector parts associated with the control box 19 may be in the form of self-sealing connectors, whereby on release of the pneumatic cord connectors from the control box, the connector parts of the control box close off to prevent loss of air therethrough.

## Claims

1. A security system for a commercial vehicle having a load space (10) provided with a closure (12) having a plurality of operable fasteners (16) each having a locking aperture for receiving a locking member so that the fastener (16) cannot be operated when a locking member passes therethrough, which security system comprises an elongate hollow tube (21) closed at its two ends (23,25) and adapted to be passed through said locking apertures of the fasteners (16), pressure means (35,36,24) connected to the tube at one location (23) and arranged to pressurise fluid contained within the tube, monitoring means (28) connected to the tube at a second location (25) spaced from said one location and arranged to monitor the pressure of fluid in the tube, and alarm means (30) connected to the monitoring means and arranged to enter a warning state in the event the monitored pressure falls below a preset threshold.

2. A security system as claimed in claim 1, wherein the pressure means (35,36,24) is connected to the tube (21) at or adjacent one end (23) thereof.

3. A security system as claimed in claim 2, wherein the monitoring means (28) is connected to the tube at or adjacent the other end (25) thereof.

4. A security system as claimed in claim 1, wherein the pressure means (35,36,24) is connected to the tube (21) part-way between the ends (23,25) thereof and there are two monitoring means (28) connected to the tube at or adjacent the two ends thereof.

5. A security system as claimed in any of the preceding claims, wherein an elongate member (40) resistant to crushing extends internally of the tube (21) for substantially the whole length thereof.

6. A security system as claimed in claim 5, wherein the elongate member (40) is attached to end closures for the tube (21).

7. A security system as claimed in claim 5 or claim 6, wherein the elongate member (40) comprises one of a flexible metal bar, a flexible metal rod or a steel cable.

8. A security system as claimed in any of the preceding claims, wherein the pressure means (35,36,24) is arranged to apply one of a steady fluid pressure or a time-varying fluid pressure to the interior of the tube (21).

9. A security system as claimed in any of the preceding claims, wherein the fluid within the tube (21) is air.

10. A security system as claimed in claim 9, wherein the pressure means (35,36,24) includes a connection (32) to a pneumatic reservoir tank (33) for the air brakes of a vehicle having said load space.

11. A security system as claimed in any of the preceding claims, wherein the monitoring means comprises a pressure transducer (28) providing an electrical output dependent upon the sensed pressure.

12. A security system as claimed in any of the preceding claims, wherein the alarm means (30) provides at least one of a visual and an audible alarm in the event the monitoring means detects a fall in pressure below a threshold value.

13. A security system as claimed in any of the preceding claims, wherein the alarm means is arranged to latch in an alarm condition once the monitoring means (28) detects a fall in pressure below a threshold value, even should the monitoring means detect a rise in pressure again to above the threshold value.

14. A commercial vehicle (10) having a load space provided with a closure (12) having a plurality of operable fasteners (16) each having a locking aperture for receiving a locking member, in combination with a security system as claimed in any of the preceding claims and with the tube (21) thereof passing in sequence through the locking apertures of the fasteners (16).
